# EUROPEAN PATENT APPLICATION

(11) **EP 3 597 614 A1**
(43) Date of publication of application: **22.01.2020**
(21) Application number: 18183974.7
(22) Date of filing: 17.07.2018
(51) Int. Cl.: C04B 22/10, C04B 28/06, C04B 40/00

(54) **NEW RETARDING SYSTEM FOR CSA-BASED CEMENTS**

(71) Applicant: HeidelbergCement AG, 69120 Heidelberg (DE)
(72) Inventor: MARCHI, Maurizio Iler, 20066 Melzo (IT)
(74) Representative: Cattaneo, Elisabetta

(57) **Abstract**

The invention relates to a retarding composition comprising a carboxylic acid or a salt thereof selected from tartaric acid, citric acid and a mixture thereof and a salt of a monovalent alkaline metal selected from sodium and potassium, wherein the equivalent ratio of M⁺ to COO⁻ is in the range from 0.50 to 9.00. Preferably the composition comprises tartaric acid and sodium carbonate or a salt thereof in a ratio Na⁺ to COO⁻ in the range from 3 to 5. The composition of the invention can be used as a retarder of CSA-cement or ternary cement comprising CSA-cement and so it can be part of a cementitious composition.

## Description

### FIELD OF THE INVENTION

The present invention concerns a retarding composition comprising a carboxylic acid or a salt thereof and salt of sodium, wherein the equivalent ratio of Na⁺ to COO⁻ is in the range from 0.50 to 9.00. Specifically, the invention concerns the use of the retarding composition in calcium sulfoaluminate (CSA) cements.

### PRIOR ART

Calcium sulfoaluminate (CSA) cements and binders containing them have gained increasing attention lately since they became a valid alternative to Portland cement (OPC). It is known that manufacturing Portland cement (OPC) releases considerable amounts of CO₂ and also requires high amounts of energy, alternative binders are sought for and CSA is one such alternative.

Retardation is one of the most critical issues in the formulation of CSA-based mortars and concretes.

The setting times of CSA cements used as binders in mortar or concrete depend on their ye'elimite content and the amount and reactivity of the added calcium sulphate. The formation of ettringite from ye'elimite and sulfate is very fast and results in a loss of workability of the mortar or concrete. To slow down the reaction and provide sufficient workability, a retarder needs to be added.

Retardation of CSA is a crucial aspect specifically in the case of applications on concrete, for example in preparing ready-mix concrete, where workability times longer than 1.5 hour are usually necessary for the proper transportation and placing. The main problem to be solved by a retarder in CSA cements is to retard the formation of ettringite without impairing the development of compressive strength.

Boric acid or Sodium tetraborate (e.g. Borax) are considered the most effective retarders for CSA and they are widely used in China. Apart for the cost reasons, the use of Borax in the many countries is critical for some health and safety issues and for this reason its use is not common in the dry mortar sector.

At the time being, the use of organic acids, such as citric and tartaric acid or their salts such as Na-tartrate, Na-citrate, Na-gluconate have been demonstrated to be the only effective solution for CSA-cement. However, their effectiveness in the setting retardation is relative (it's difficult to obtain retardations longer than 45 minutes) and usually it makes necessary the use of other compounds for counterbalancing the negative effects on the early strengths development. An over-dosage has also negative effects on Portland cement, drastically inhibiting the strengths evolution in ternary binders. The retarding effect of hydroxylic acids is probably linked to both their complexation capacity of Ca²⁺ and Al³⁺ ions, causing a retardation in the ettringite precipitation and to the formation of protective films over the anhydrous phases.

In a document still not published of the same applicant (European patent application EP17193826.9) it was now found that a combination of aminopolycarboxylic acids or their salts with carboxylic acids or their salts can retard the ettringite formation and so the setting of CSA pastes when added to them, while maintaining belite reactivity and strength.

At any rate, all the known retarding systems have showed still a strong impact on the strength development.

There is still the need of retarding system capable not only to reach long setting time, but contemporaneously without compromising the strengths, specifically the early strengths.

### SUMMARY OF THE INVENTION

The inventors of the present invention have surprisingly found a retarding composition capable of obtaining formulations with setting times longer than 1 hour without affecting the strength evolution at early ages, when added to pure CSA or to ternary mixtures.

Therefore, the present invention relates a composition comprising a carboxylic acid or a salt thereof selected from tartaric acid, citric acid and a mixture thereof and a salt of a monovalent alkaline metal selected from sodium and potassium, wherein the equivalent ratio of M⁺ to COO⁻ is in the range from 0.50 to 9.00.

When in the present invention, the following terms are used:
- "carboxylic acid or a salt thereof" it is intended an acid or a salt thereof capable to release "COO⁻" anion and selected from the group consisting of tartaric acid and citric acid and a mixture thereof;
- "salt of a monovalent alkaline metal" it is intended a salt capable to release "M⁺" cation; the monovalent alkaline metal is sodium or potassium, more preferably sodium, the anion of the salt is preferably carbonate, hydrogen carbonate or sulphate;
- "retarder" it is intended a compound capable to retard the setting time when added to a cement mixture, while maintaining good strengths at early stages of the setting step;
- with the term "calcium sulfoaluminate cement" or "CSA cement" or "plain CSA cement", it is intended to comprise CSA cement, which comprises by turn CSA clinker;
- "ternary cement mixture comprising CSA" it is intended a cement mixture comprising more than one different cement, wherein at least one cement is a CSA cement";
- "about" next to a specific value it is intended ± 0.10;
- "CSA-binder" it is intended a binder based on a CSA-cement or a ternary cement mixture comprising CSA.

In view of the surprising retarding properties of the above retarding composition, the invention relates to a use of the above composition as retarder for CSA-cement.

CSA cements, comprising also clinker are a family of products characterized by the presence in their compositions of ye'elimite phase (or Kline's salt) with a general formula M₄Me₃SO₄ (with M = Ca, Na, Mg, K; Me = Al, Fe, Ti).

The CSA cements included in the present invention have been widely described both in the literature (ref. Odler, Taylor & Francis, 23 mar 2000 - pag. 71) and in many patents also in name of the present applicant. They are characterized by the presence of ye'elimite phase in different amounts (from 5-75% b.w.) and can present both high early or normal hardening strengths; they are usually characterized by a pH that is lower than 12.5 in the first hours/days of hydration. The CSA cement used in the present invention has a minimum content of ye'elimite of 45% b.w of the total amount of CSA-cement.

In another aspect the invention relates to a cementitious composition comprising the composition of the invention and CSA-cement.

In a still another aspect the invention relates to a ternary cementitious composition comprising the composition of the invention and at least two different cements, wherein at least one cement is a CSA cement.

In a still further aspect the invention relates to a use of the above composition as retarder in ternary mixture comprising CSA-cement.

The composition of the invention hence can be added to CSA-cement or to ternary mixture comprising CSA-cement, thus surprisingly reaching more than 1 hour of initial setting time, preferably one hour and the half, and similar strengths as plain cement 8h after setting.

The retarding system of the invention is hence based on the combination of a carboxylic acid (or its salt) and a salt of a monovalent metal, wherein the two compounds are properly combined so as to obtain an equivalent ratio of M⁺ to COO⁻ in the range from 0.50 to 9.00, preferably from 3.00 to 5.00.

In a more preferred embodiment the optimized composition to be added to plain CSA comprises sodium carbonate and tartaric acid in a Na⁺/COO⁻ equivalent ratio of about 3.17.

In another aspect the invention relates to a cementitious composition comprising the composition of the invention and CSA-cement.

In a still another aspect the invention relates to a ternary cementitious composition comprising the composition of the invention and at least two different cements, wherein at least one cement is a CSA cement.

Concretes and mortars obtained by the cementitious composition of the invention are also further aspects of the invention. The processes for preparing mortars and concretes by using cementitious compositions are well known in the art.

The retarder, i.e. the composition of the invention, used according to the invention can be prepared for addition to mortars or concretes. The retarder can be also included in the dry CSA-cement or in a binder formulation. It can be added to the clinker before milling or after the milling. It can be added at any stage of the processing of the cement or binder or after.

In a still further aspect the invention relates to a method of retarding the setting of a binder or a mortar or a concrete comprising the step of adding a composition comprising a carboxylic acid or a salt thereof selected from tartaric acid, citric acid and a mixture thereof and a salt of a monovalent alkaline metal selected from sodium and potassium, wherein the equivalent ratio of M⁺ to COO⁻ is in the range from 0.50 to 9.00, i.e. the composition of the invention, as a retarder to a CSA-cement or to a ternary cement mixture comprising CSA.

In a still further aspect the invention relates to a CSA-binder with controlled setting comprising the composition comprising a carboxylic acid or a salt thereof selected from tartaric acid, citric acid and a mixture thereof and a salt of a monovalent alkaline metal selected from sodium and potassium, wherein the equivalent ratio of M⁺ to COO⁻ is in the range from 0.50 to 9.00, i.e. the composition of the invention, as a retarder and CSA-cement or a ternary cement mixture comprising CSA. The composition of the invention resulted to be surprising, since Na₂CO₃, as salt of a monovalent alkaline metal in the composition of the invention, was usually used as an accelerating agent in the prior art, when used in the same amounts used in the present invention. As it will be more evident from the experimental part it was unexpected that Na₂CO₃ used in combination of a retarding compound acted in a synergistic way in retarding CSA-setting.

The retarding composition of the invention has been successfully applied to ternary mixture comprising CSA and it has demonstrated to be poorly sensitive to temperature variations as it will be evident from the experimental part of the description.

### DETAILED DESCRIPTION OF THE INVENTION

The present invention relates a composition comprising a carboxylic acid or a salt thereof selected from tartaric acid, citric acid and a mixture thereof and a salt of a monovalent alkaline metal selected from sodium and potassium, wherein the equivalent ratio of M⁺ to COO⁻ is in the range from 0.50 to 9.00.

The composition of the invention resulted to be a retarding composition, i.e. a retarder.

The carboxylic acid, or its salt, is selected from tartaric acid, citric acid and a mixture thereof. The carboxylic acid or its salt can be hydrated (for example as monohydrate or decahydrate) or not (anhydrous carboxylic acid or its salt). Preferably, the carboxylic acid is tartaric acid, preferably, in any enantiomeric form or diastereomeric form, more preferably as L-(+)-tartaric acid.

In a preferred embodiment of the invention, the carboxylic acid is in the form of a salt. More preferably, the salt of the carboxylic acid is sodium carboxylate. In this latter embodiment, according to the invention when the monovalent alkaline metal is sodium, then sodium amount deriving from the salt of carboxylic acid has to be added to the equivalent amount of the sodium salt so as the equivalent ratio of the total Na⁺ ion to the total COO⁻ ion is in the range from 0.50 to 9.00.

The composition comprises also a salt of a monovalent alkaline metal M⁺ selected from sodium and potassium, more preferably is sodium.

The salt can be a carbonate, a hydrogen carbonate or a sulphate.

In a preferred embodiment the salt of a monovalent alkaline metal is a salt of sodium. The salt of sodium can be selected from the group consisting of sodium hydrogen carbonate, disodium carbonate and disodium sulphate. More preferably the salt of sodium is disodium carbonate, also named as sodium carbonate.

The equivalent ratio of M⁺ to COO⁻ is in the range from 0.50 to 9.00, preferably 3.00 to 5.00, more preferably it is about 3.17.

In another aspect the invention relates to a use of the above composition as retarder for plain CSA cement.

In a still another aspect the invention relates to a use of the above composition as retarder in ternary mixture comprising CSA-cement.

In a preferred embodiment the optimized composition to be added to plain CSA comprises sodium carbonate and tartaric acid in a Na⁺/COO⁻ equivalent ratio of about 3.17.

The composition of the invention hence can be added to CSA-cement or to ternary mixture comprising CSA-cement, thus surprisingly obtaining more than 1 h of initial setting time, preferably one hour and the half, and similar strengths as plain cement 8h after setting.

The amount of the composition of the invention to be added to CSA-cement or ternary mixture comprising CSA-cement for having proper retardation range from 0.7-3.0% by weight with respect to cement. When added to CSA-cement, the amount of the composition is preferably in the range from 0.7-1% by weight with respect to CSA-cement. When added to ternary mixture comprising CSA-cement, the amount of the composition is preferably in the range from 1-3% by weight with respect to all cement.

In another aspect the invention relates to a cementitious composition comprising the composition of the invention and CSA-cement.

In a still another aspect the invention relates to a ternary cementitious composition comprising the composition of the invention and at least two different cements, wherein at least one cement is a CSA cement.

Concretes and mortars obtained by the cementitious composition of the invention are also further aspects of the invention.

In a still further aspect the invention relates to a method of retarding the setting of a binder or a mortar or a concrete comprising the step of adding a composition comprising a carboxylic acid or a salt thereof selected from tartaric acid, citric acid and a mixture thereof and a salt of a monovalent alkaline metal selected from sodium and potassium, wherein the equivalent ratio of M⁺ to COO⁻ is in the range from 0.50 to 9.00, i.e. the composition of the invention, as a retarder to a CSA-cement or to a ternary cement mixture comprising CSA.

In a still further aspect the invention relates to a CSA-binder with controlled setting comprising a composition comprising a carboxylic acid or a salt thereof selected from tartaric acid, citric acid and a mixture thereof and a salt of a monovalent alkaline metal selected from sodium and potassium, wherein the equivalent ratio of M⁺ to COO⁻ is in the range from 0.50 to 9.00, i.e. the composition of the invention, and CSA-cement or a ternary cement mixture comprising CSA.

The invention will be now detailed with respect to some embodiments and to examples of evaluation of the final properties achieved by the composition of the invention.

### EXPERIMENTAL PART

### Materials and Methods

The following materials have been used:
• "i.tech ALICEM®" cement: a mix of sulphoaluminate clinker (i.tech ALI PRE GREEN) and micronized calcium sulphate dosed in stoichiometric proportion
• CEM I 52.5 R, i.e. Portland cement from HC plant
• CEM II/A-LL 42.5R, i.e. Portland Limestone cement from HC plant
• L-(+)-Tartaric Acid
• Anhydrous Citric Acid · Sodium Carbonate (named as ref)
• Sodium Carbonate (type 1) supplied by Chemische Fabrik Kalk GMBH, wherein at least 97% of the particles of sodium carbonate have size above 100 µm
- Sodium Carbonate (type 2) supplied by Chemische Fabrik Kalk GMBH, wherein at least 65% of the particles of sodium carbonate have size above 63 µm
• Potassium Carbonate (RPE) supplied by Carlo Erba
• trisodium citrate (RPE) supplied by Carlo Erba
• disodium Tartrate (RPE) supplied by Carlo Erba
• Boric Acid (RPE) supplied by Sigma-Aldrich
• EDTA (RPE) supplied by Sigma-Aldrich

The test for the evaluation of the properties of the sample of the prior art and of the invention on different cements were carried out according to the following requirements:
- Setting time test has been performed according to EN196-3 (2016), using an automatic penetrometer RMU without using water film on top of the sample:
- Tests were carried out with water/cement ratio maintained fixed at 0.35;
- Some comparison tests (example 4) were performed by applying a water/cement ratio varied in order to obtain a target value of 180 ± 10 mm on spreading table (according to EN1015-3 (2007). This choice is for a better performance comparison; in fact, mixtures containing the composition of the invention tend to present bleeding by using the standard water/cement ratio 0.5, due to the plasticizing effect of retarders.
- Mechanical strengths have been evaluated on standard mortar according to EN196-1 (2016), apart in comparison tests where the water/cement ratio has been varied as explained above

### Example 1: Evaluation of different retarding system for i.tech ALICEM ®

Compounds of the prior art and the composition of the invention were added to i.tech ALICEM® in order to evaluate compressive strengths (CS) of final cement mortar and the setting times.

In Table 1 all the tested compounds/compositions are reported with the correspondent results.

**Table 1. Performance of i.tech ALICEM® with different retarding systems**

| SAMPLE | EDTA | Boric acid | Tartaric Acid | Na₂CO₃ | Initial set | Final set | CS 8h | CS 24h |
|---|---|---|---|---|---|---|---|---|
| | Weight percentage (wt%) | | | | min | | MPa | |
| comparative sample 1 | | | | | 13 | 20 | 30.07 | 42.0 |
| comparative sample 2 | | 0.5 | | | 83 | 120 | 38.44 | 50.86 |
| comparative sample 3 | | | 0.2 | | 27 | 40 | 22.88 | 40.07 |
| comparative sample 4 | | | 0.4 | | 45 | 67 | 17.66 | 38.92 |
| comparative sample 5 | 0.30 | | 0.4 | | 60 | 86 | 10.3 | 40.52 |
| comparative sample 6 | | | | 0.5 | 8 | 18 | n.d. | n.d. |
| comparative sample 7 | | | | 0.9 | 9.5 | 20.5 | n.d. | n.d. |
| comparative sample 8 | | | | 1.4 | 9.5 | 20.5 | n.d. | n.d. |
| invention sample 9 | | | 0.2 | 0.8 | 133 | 158 | 9.54 | 44.84 |

As it is evident from Table 1:
- comparative sample 1 did not contain retarding compounds, thus showing setting times very low;
- Comparative sample 2 containing boric acid showed good setting times but the compressive strengths were similar to comparative sample 1. Boric acid confirmed to be very effective in set retarding (around 1 hour and a half), without compromising the strengths at 8h (slight increase). As above indicated the use of boric acid is a good retarding system, but the compound should not be added for healthy concerns.
- Comparative samples 3-4 contained tartaric acid as retarder, and the performances were certainly worse than comparative sample 2. Specifically, the increasing of content of organic retarder (tartaric acid) up to 0.4% (comparative sample 4) permitted to reach 45 min of initial setting, but with strong impact on the strengths development (at 8h compressive strengths were similar to 4h evaluation of comparative sample 1);

- Comparative sample 5 contained the retarding composition according to the unpublished patent application of the same applicant. The retarding composition EDTA/tartaric acid has shown a retarding effect with loss in compressive strengths, thus permitting to reach 1h of initial setting time, but with a strong effect on strengths development.
- Comparative samples 6,7 and 8 contained sodium carbonate; this latter acted as a set accelerating agent in CSA, mainly in the initial setting time.

Contrarily to all the comparative samples, the combined use of a carboxylate acid, i.e. tartaric acid and a sodium salt, i.e. sodium carbonate, in an equivalent ratio of about 5.03 (sample 9 of the invention) permitted to reach very long setting time (more than 2h), reducing the early strengths, but obtaining similar strengths as the system based on EDTA at 8h.

The composition of the invention resulted to be the best retarder for obtaining very long setting time with good compressive strengths, specifically at 24 h.

### Example 2

### Evaluation of the composition of the invention

A composition comprising tartaric acid as carboxylic acid and sodium carbonate as salt of a monovalent alkaline metal has been tested by adding it to i.tech ALICEM ® in order to evaluate compressive strengths (CS) of final cement mortar and the setting times according to EN196-3 (2016).

Tartaric acid content has been varied from 0.2 to 0.4% with respect to cement, sodium carbonate from 0.2 to 0.8% with respect to cement.

The investigate responses in this test have been: initial and final setting times, compressive strengths at 8 hour, 24 hour, 2 days, 7 days, 28 days.

The compounds and their respective amounts used for the preparation of the compositions are reported in table 2 and the correspondent results in the evaluation are reported in table 3.

**Table 2: Amounts (%) of the compounds with respect to the amount of the cement**

| Composition | Tartaric acid (wt%) | Eq. of COO⁻ | Na₂CO₃ | Eq. of Na⁺ |
|---|---|---|---|---|
| 1 | 0.4 | 0.0054 | 0.5 | 0.0094 |
| 2 | 0.2 | 0.0027 | 0.2 | 0.0038 |
| 3 | 0.3 | 0.0040 | 0.5 | 0.0094 |
| 4 | 0.2 | 0.0027 | 0.5 | 0.0094 |
| 5 | 0.4 | 0.0054 | 0.2 | 0.0038 |
| 6 | 0.3 | 0.0040 | 0.2 | 0.0038 |
| 7 | 0.3 | 0.0040 | 0.8 | 0.0075 |
| 8 | 0.4 | 0.0054 | 0.8 | 0.0075 |
| 9 | 0.2 | 0.0027 | 0.8 | 0.0075 |

**Table 3: results of compositions 1-9 of the invention when added to cement**

| Composition | Equivalent ratio Na⁺/COO⁻ | Initial set | Final set | CS 8h | CS 24h | CS 2d | CS 7d | CS 28d |
|---|---|---|---|---|---|---|---|---|
| | | min | | MPa | | | | |
| composition 1 | 1.74 | 150 | 195 | 14.3 | 38.3 | 48.8 | 69.7 | 83.5 |
| composition 2 | 1.40 | 40 | 57 | 36.4 | 51.1 | 50.9 | 70.6 | 81.2 |
| composition 3 | 2.36 | 95 | 128 | 22.0 | 44.7 | 49.4 | 66.8 | 85.1 |
| composition 4 | 3.48 | 78 | 101 | 19.2 | 41.4 | 51.6 | 70.9 | 89.2 |
| composition 5 | 0.70 | 85 | 115 | 18.2 | 39.4 | 47.9 | 65.1 | 80.4 |
| composition 6 | 0.94 | 70 | 96 | 17.1 | 39.02 | 50.2 | 68.0 | 81.4 |
| composition 7 | 3.77 | 180 | 220 | 9.5 | 44.8 | 52.2 | 70.0 | 88.0 |
| composition 8 | 2.80 | 166 | 215 | 3.0 | 36.7 | 45.2 | 66.1 | 81.5 |
| composition 9 | 5.59 | 143 | 170 | 13.3 | 45.4 | 55.9 | 70.0 | 86.1 |

As it is evident from table 3 all the tested compositions having an equivalent ratio Na⁺/COO⁻from 0.50 to 9.00 were capable to retard the setting of CSA.

It is worthy to underline that compositions 3, 7 and 9 showed remarkable performances having an initial setting above 90 minutes, final setting above 120 minutes and very good compressive strengths at all the tested times for a skilled man in the art.

It was also notable that for compositions having the same amount of tartaric acid (compositions 1,5,8 - compositions 2,4,9, compositions 3,6,7), an increase of Na₂CO₃, instead of giving an accelerating effect (as it would be expected and also indicated in Table 1), contributed in a synergistic way in retarding the setting of CSA.

### Example 3:

### Comparison tests

Different compositions using different carboxylic acid or different monovalent metal were tested for their capability in retarding the setting of CSA cement in samples of ALICEM® according to EN196-3 (2016) as above reported.

In table 4 the results of the comparison tests using different organic acids or their salts are reported. The monovalent alkaline metal was sodium. The amounts have been varied considering the carboxylic acid moles, the carboxylate groups equivalents and sodium ion moles.

The results are reported in the following table 4

| Carboxylic acid or its salt | % wt Carboxylic acid or its salt | % wt Na₂CO₃ | COO⁻ eq | Na⁺ eq | Equivalent ratio Na⁺/COO⁻ | Initial Setting min | Final setting min |
|---|---|---|---|---|---|---|---|
| Tartaric acid | 0.22 | 0.49 | 0.0029 | 0.0092 | 3.17 | 93 | 124 |
| Na tartrate | 0.29 | 0.18 | 0.0030 | 0.0064 | 2.13 | 70 | 95 |
| Na tartrate | 0.29 | 0.38 | 0.0030 | 0.0102 | 3.40 | 112 | 137 |
| Citric acid | 0.19 | 0.49 | 0.0030 | 0.0092 | 3.07 | 60 | 95 |
| Citric acid | 0.28 | 0.49 | 0.0044 | 0.0092 | 2.09 | 55 | 88 |
| Citric acid | 0.38 | 0.49 | 0.0059 | 0.0092 | 1.56 | 60 | 76 |
| Citric acid | 0.28 | 0.9 | 0.0044 | 0.0170 | 3.86 | 110 | 155 |
| trisodium citrate dihydrate | 0.29 | 0.18 | 0.0030 | 0.0064 | 2.13 | 46 | 65 |

In order to have the correct equivalent ratio the amount of the alkaline metal deriving from also the salt of the carboxylic acid has been added to the amount of alkaline metal deriving from the carbonate salt.

From table 4 it is evident that for all the compositions, with an equivalent ratio Na+/COO- from about 1.56 to about 3.86, when added to cement, the setting times were satisfying. Preferred setting times longer than 90 minutes can be preferably obtained with equivalent ratio from 3 to 4.

The test was repeated by using different sodium carbonate sources and alkaline carbonates.

In table 5 the results of the comparison tests are reported.

**Table 5:**

| Salt of monovalent alkaline metal (amount 0.49% wt) | carboxylic acid (amount 0.22% wt) | Equivalent ratio M⁺/COO⁻ | Initial setting (min) | Final setting (min) |
|---|---|---|---|---|
| Na₂CO₃ ref | Tartaric acid | 3.17 | 93 | 124 |
| Na₂CO₃ type 1 | Tartaric acid | 3.17 | 85 | 116 |
| Na₂CO₃ type 2 | Tartaric acid | 3.17 | 90 | 120 |
| K₂CO₃ | Tartaric acid | 2.36 | 70 | 97 |
| Na₂CO₃ in water | Tartaric acid | 3.17 | 103 | 137 |

From the above table it was evident that no influence of sodium carbonate source (and solubility) arose. Potassium carbonate showed to be less effective than sodium carbonate, even a good retarding result in the composition with tartaric acid was evidenced.

### Example 4 Test in ternary mixtures

The composition of the invention consisting of sodium carbonate and tartaric acid and having a Na⁺/COO⁻ equivalent ratio of about 3.17 was used for retarding a cement ternary mixture comprising CSA cement.

The ternary mixtures used in the test were:
- 60% CEM II/A-LL 42.5R and 40% i.tech ALICEM®;
- 40% CEM I 52.5R and 60% i.tech ALICEM®.

The composition comprising tartaric acid as carboxylic acid and sodium carbonate as salt of a monovalent alkaline metal has been tested by adding it to the above ternary mixture in order to evaluate compressive strengths (CS) of final cement mortar and the setting times according to EN196-3 (2016).

The results are reported in the following table 6, the setting times were evaluated at water/cement ratio of 0.35; mortar tests water/cement 0.5

| i.tech ALICEM® | CEM II/A-LL | CEM I | Composition of the invention (%wt correct) | Initial setting (min) | Final setting (min) | CS 8h (MPa) | CS 24h (MPa) |
|---|---|---|---|---|---|---|---|
| 40 | 60 | | 0 | 22 | 30 | 10.7 | 15.4 |
| 60 | | 40 | 0 | 10 | 12 | 16.6 | 33.4 |
| 40 | 60 | | 1.00 | 76 | 100 | 10.9 | 17.9 |
| 60 | | 40 | 0.93 | 64 | 78 | 11.0 | 30.4 |

From the above data in table 6, the composition of the invention resulted to be used as a retarder also for ternary mixtures, thus guaranteeing to retard the setting times, while maintaining the compressive strengths of the samples without any retarder at 8h.

The composition was also tested by evaluating also to the addition to plain i.tech ALICEM® at equal mortar workability (180 ± 10 mm) according to EN1015-3 (2007); once established the water/cement ratio, workability retentions on mortar for plain CSA cement and for the ternary mixtures have been also evaluated.

All the results are reported in Table 7.

**Table 7: test on mortar at equal workability**

| | | | | | | | |
|---|---|---|---|---|---|---|---|
| i.tech ALICEM® | | 100 | 100 | 40 | 40 | 60 | 60 |
| CEM II/A-LL | | | | 60 | 60 | | |
| CEM II | | | | | | 40 | 40 |
| Composition of invention (% wt) | | | 0.7 | | 1.0 | | 1.0 |
| Water/cement ratio | | 0.35 | 0.35 | 0.35 | 0.35 | 0.35 | 0.35 |
| Initial setting | min | 10 | 93 | 22 | 76 | 10 | 75 |
| Final setting | | 16.5 | 124 | 30 | 100 | 12 | 83 |
| Water/cement ratio | | 0.5 | 0.43 | 0.5 | 0.45 | 0.50 | 0.43 |
| CS 5h* | MPa | | 13.7 | | 8.6 | | 22.0 |
| CS 8h | | 30.1 | 31.9 | 10.7 | 13.2 | 16.6 | 28.0 |
| CS 24h | | 42.1 | 47.1 | 15.4 | 19.2 | 33.4 | 40.1 |
| Workability T=0 min | | 185 | 190 | 190 | 185 | 180 | 180 |
| T=15 min | | 138 | 190 | 163 | 185 | 128 | 175 |
| T=30 min | mm | 100 | 185 | 122 | 160 | 100 | 160 |
| T=45 min | | - | 163 | 100 | 142 | - | 100 |
| T=60 min | | - | 150 | - | 122 | - | - |

The plasticizing effect of the retarding composition of the invention allows to reduce the water/cement ratio, both for plain CSA and ternary mixtures. It was surprising that the composition allowed to ameliorate the workability with respect to the sample without the composition.

The efficacy of the composition at different temperatures was tested, by evaluating the setting times according EN196-3 (2016) with the water/cement ratio at equal mortar workability as described in EN1015-3 (2007).

The results of setting times are in table 8.

**Table 8: Setting time at variable water/cement ratio (assessed for having equal workability on mortar)**

| | | | | |
|---|---|---|---|---|
| i.tech ALICEM® | | 100 | 40 | 60 |
| CEM II/A-LL | | | 60 | |
| CEM II | | | | 40 |
| Composition of invention (% wt) | | 0.7 | 1.0 | 1.0 |
| Water/cement ratio | | 0.43 | 0.45 | 0.43 |
| 5°C | | | | |
| Initial setting | min | 130 | 125 | 85 |
| Final setting | | 175 | 175 | 117 |
| 10°C | | | | |
| Initial setting | min | 148 | 113 | 65 |
| Final setting | | 190 | 178 | 93 |
| 20°C | | | | |
| Initial setting | min | 145 | 152 | 65 |
| Final setting | | 195 | 186 | 92 |
| 30°C | | | | |
| Initial setting | min | 150 | 93 | 95 |
| Final setting | | 200 | 163 | 130 |

The composition of the invention surprisingly avoided a strong influence of the temperature on the setting times, contrarily from what was known for the prior art retarding system. The setting times were in fact poorly affected by the temperature. This property allowed to use of the composition as a retarder in any season and so could offer a not common flexibility in the final use, permitting to fix its finale dosage independently from the season.

## Claims

1. A composition comprising a carboxylic acid or a salt thereof selected from tartaric acid, citric acid and a mixture thereof and a salt of a monovalent alkaline metal selected from sodium and potassium, wherein the equivalent ratio of M⁺ to COO⁻ is in the range from 0.50 to 9.00.

2. The composition according to claim 1, wherein the carboxylic acid is tartaric acid.

3. The composition according to claim 1 or 2, wherein the carboxylic acid is in the form of a salt, preferably a salt of sodium.

4. The composition according to anyone of 1-3, wherein the monovalent alkaline metal M⁺ of the salt of a monovalent alkaline metal is sodium.

5. The composition according to anyone of claims 1-4, wherein the salt of a monovalent alkaline metal is a carbonate salt, hydrogen carbonate salt or sulphate salt, preferably carbonate salt.

6. The composition according to anyone of claims 1-5, wherein the equivalent ratio of M⁺ to COO⁻ is in the range from 3.00 to 5.00.

7. The composition according to claim 6, wherein the equivalent ratio of M⁺ to COO⁻ is about 3.17.

8. A cementitious composition comprising the composition according to anyone of claims 1-7 and CSA-cement.

9. A ternary cementitious composition comprising the composition according to anyone of claims 1-7 and at least two different cements, wherein at least one cement is a CSA cement.

10. A use of the composition according to anyone of claims 1-7 as retarder for plain CSA cement.

11. A use of the composition according to anyone of claims 1-7 as retarder in ternary mixture comprising CSA-cement.

12. The use according to claim 10 or 11, wherein the amount of the composition to be added to CSA-cement or ternary mixture comprising CSA-cement ranges from 0.7 to 3.0% by weight with respect to the total cement.

13. A method of retarding the setting of a binder or a mortar or a concrete comprising the step of adding the composition according to anyone of claims 1-7 as a retarder to a CSA-cement or to a ternary cement mixture comprising CSA.

14. A CSA-binder with controlled setting comprising the composition according to anyone of claims 1-7 and CSA-cement or a ternary cement mixture comprising CSA.
